# EUROPEAN PATENT APPLICATION

(11) **EP 1 124 334 A1**
(43) Date of publication of application: **16.08.2001**
(21) Application number: 00102750.7
(22) Date of filing: 10.02.2000
(51) Int. Cl.: H04B 1/48, H04B 1/44

(54) **Radio station for transmitting and receiving radio signals**

(71) Applicant: SIEMENS AKTIENGESELLSCHAFT, 80333 München (DE)
(72) Inventor: Jensen, Niels, 9490 Pandrup (DK); Faessler, Georg, 9440 Aabybro (DK)

(57) **Abstract**

The invention relates to a radio station for transmitting and receiving radio signals. A power amplifier (3) in the transmitting part of the radio station is used as a switch for the transmitting part of the radio station. The output impedance of the power amplifier (3) is, if the power amplifier (3) is switched off by a processor (15), mostly imaginary. Therefore, the return loss of received signals propagating to the power amplifier (3) is low. Optionally, a matching network (5) and/or a filter network (6) are inserted between the power amplifier (3) and an antenna (8). The matching network (5) and the filter network (6) are realised either by discrete elements or by distributed elements. The receiving part (7) of the radio station is connected to the antenna (8) by a switch (9) also operated by the processor (15).

## Description

### Prior art

The invention relates to a radio station for transmitting and receiving radio signals in accordance with the generic class of the independent patent claim.

The transmitting (TX) and receiving (RX) part of a radio station for example a mobile phone have to be combined at the antenna provided there is only one antenna for receiving and transmitting signals which is a usual practice. The combining is done using duplex filters or two switches. The switches connect either the transmitting or the receiving part to the antenna. Series switches or stub switches with a quarter wavelength transformer are usually employed. As the switches PIN diodes or transistors are preferred.

### Advantages of the invention

The radio station having the characterising features of the independent patent claim has the advantage to be realised with less circuit elements. Using the on and off state of the power amplifier a switch is easily realised connecting the transmitting part of the radio station to its antenna. Therefore, no switch and no bias network are needed and the design is consequently much simpler. In addition, a reduction of loss in the signal path in the TX part is provided because less circuit elements are needed. Therefore, less power is required to provide the same radiated power.

It is advantageous to use a transmission line as the at least one network connecting the power amplifier and the antenna if the output of the power amplifier can be directly connected to the antenna.

It is an advantage to use a matching network between the power amplifier of the transmitting part and the antenna to provide an impedance matching and thereby optimising the amount of output power.

Moreover, a filter network is employed between the power amplifier of the transmitting part of the radio station and the antenna in order to filter unwanted harmonics generated by the power amplifier.

The features of the dependent patent claims enable further improvements of the invention.

Apart from this, the matching network and the filter network are realised either by discrete elements or distributed elements. Discrete elements are useful for lower frequencies since they enable an easy design. Distributed elements, however, are the better elements at microwave frequencies. The distributed elements are realised using transmission lines.

Moreover, it is an advantage to use either a PIN diode or a transistor as the switch to connect the receiving part to the antenna. Both are fast switches and are easily switchable by the processor.

### Drawings

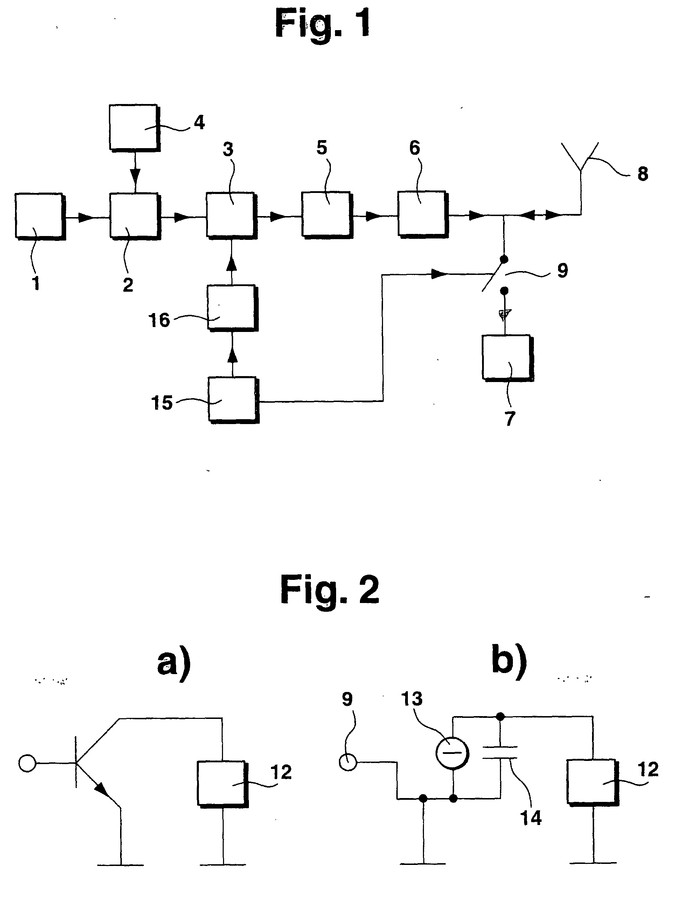

Exemplary embodiments of the invention are shown in the figure and elucidated in detail in the description below. Figure 1 shows a block diagram of the radio station after the invention.

### Description

As stated above the necessity of combining the RX and TX parts of a radio station at the antenna of the radio station entails the introduction of separate circuit elements facilitating the combining. These additional circuit elements increase the attenuation of the signal paths.

The invention, however, avoids one or more additional circuit elements in the signal path of the TX part and takes advantage of an output impedance of the power amplifier of the TX part in its off and on state. If the power amplifier is switched on, the output impedance is low whereas if the power amplifier is switched off, the output impedance is primary imaginary. This means that a signal which is received by the antenna and transferred to the output of the power amplifier is reflected back at the output of the switched off power amplifier with a small return loss. Consequently, there is no need for switch switching the TX part on and off the antenna. Especially in GSM, a transmitting mode and receiving mode are defined using time slots being dedicated for transmitting and receiving signals. In the transmitting mode the power amplifier is switched on, whereas in the receiving mode the power amplifier is switched off.

Figure 1 shows a block diagram of the radio station after the invention. A data source 1 is connected to a first input of an up-converter 2. A local oscillator 4 is connected to a second input of the up-converter 2. An output of the up-converter 2 is connected to a first input of a power amplifier 3. A biasing network 16 is connected to a second input of the power amplifier 3. A first output of a processor 15 is connected to an input of the biasing network 16. A second output of the processor 15 is connected to a first input of a switch 9. An output of the power amplifier 3 is connected to an input of a matching network 5. An output of the matching network 5 is connected to the input of a filter network 6. An output of the filter network 6 is connected to an antenna 8 and a second input of the switch 9. An output of the switch 9 is connected to a RX part 7.

The data source 1, the up-converter 2, the local oscillator 4, the power amplifier 3, the biasing network 16, the matching network 5 and the filter network 6 comprise the TX part of the radio station.

The data source 1 is a microphone witch attached electronics for amplifying the signals coming from the microphone and processing them. Alternatively, control elements such as a keyboard can be used as the data source 1 whereby these control elements can be multiplexed with the microphone and its attached electronics so that every signal from different data sources is transferred to the up-converter 2.

The up converter 2 converts the signals coming from the data source 1 to the transmitting frequency using signals coming from the local oscillator 4. The local oscillator 4 generates a harmonic signal at a fixed frequency. The up-converter 2 is therefore a multiplier multiplying the signals from the local oscillator 4 and the data source 1. As a multiplier an non-linearity is needed. Such a non-linearity is provided by a current-voltage characteristic of a diode or a transistor. If two signals having two frequencies are multiplied the resulting product exhibits a signal component at a frequency which is the sum of the two frequencies of the two signals. The up-converter 2 is designed so that a maximum amount of signal from the data source 1 is up converted to the sum frequency.

Generally the modulation is as follows, two sinusoidal radio frequency (RF) signals with a phase difference of 90 degrees are generated and the two data signals I (in-phase) and Q (quadratur-phase) are multiplied with these carriers. Afterwards, the two RF signals are added together. Presenting this in a complex plane (real axis to the right and imaginary axis to the top) shows the I signal on the real axis and the Q signal on the imaginary axis. The simplest modulation is a 1 and -1 at the I and Q outputs, which then gives four states of different phases (45,135,225 and 315). This is called 4PSK (4 state phase shift keying). The disadvantage is that the phase shift is done immediately when changing an I or Q signal. This would require infinite bandwidth, so that a more smooth transition is preferred. The modulation applied for GSM is GPSK (Gaussian Phase Shift Keying), which gives the highest throughput in bits for a given bandwidth.

The power amplifier 3 is designed in a way so that the signal at the up converted frequency is amplified by the amplifier 3. The power amplifier 3 consists here of several stages to achieve a higher gain than it is possible with one stage. Each stage exhibits a transistor in common emitter configuration. The common-emitter configuration is used if a transistor is employed as an amplifier. Alternatively, only one stage consisting of one transistor can be used as the power amplifier provided this transistor provides sufficient amplification.

Figure 2 shows a transistor in a circuit diagram switched in a common-emitter configuration in Fig. 2b and the equivalent small signal model in Fig. 2b. In figure 2a, the input signal is applied to the base of the transistor 10, so that the input signal is amplified by the transistor 10. A load impedance 12 is- connected to the collector of the transistor 10 and on the other side to mass. The applied signals to the base 9 of the transistor 10 are amplified and the amplified signal is applied to the load impedance 12. This is valid provided the transistor 10 is properly biased.

The equivalent small signal model in Fig. 2b shows the output impedance of the transistor 10 as the amplifier. The same elements shown already in figure 2a have the same reference number. The input electrode 9 is connected to the feedback impedance 11, a current source 13 and a capacitor 14. The current source 13 is connected to the load impedance 12 and the capacitor 14. At the other end the current source 13 is connected to the capacitor 14, the feedback impedance 11 and the input electrode 9. The output impedance of the transistor 10 consists of the capacitor 14 and the current source 13. In this simplified small signal model resistors due to transmission lines and a resistance in the semiconductor are neglected. Therefore, the output impedance of a transistor which is in off state that means the current source 13 is off would show only a capacitor and thereby a pure imaginary impedance as the output impedance.

The biasing network 16 provides the supply voltage for the power amplifier 3. The biasing network 16 is controlled by the processor 15 of the radio station. A conventional voltage source connected to the battery or power supply of the radio station is the main part of the biasing network 16. The processor 15 however, is performing different tasks concerning signal processing apart from controlling the biasing network 16. This is necessary because the power amplifier 3 must not be switched on if it is not used for transmitting signals in order to save battery lifetime. Especially for GSM (Global System for Mobile Communication) this is necessary, since here time division multiple access is used which means that time is divided into time slots, individual time slots being dedicated to transmitting or receiving signals for a radio station. In GSM, every eighth time slot is used for transmitting signals for an individual radio station, so the power amplifier needs only to be switched on by the processor every eighth time slot.

The matching network 5 which is connected to the output of the power amplifier 3 transforms the output impedance of the power amplifier 3 to another value so that it is matched to the input impedance of the filter network 6 and the input impedance of the antenna 8. Impedance matching is necessary for a maximum power transfer from the power amplifier 3 to the antenna 8. If there is no proper impedance matching, power is reflected back and consequently not used for transmitting signals.

The matching network 5 consists of passive elements which are either discrete or distributed. Discrete elements are inductors and capacitors which can be obtained from commercial suppliers. Distributed elements consist of transmission lines. Using transmission lines negative and positive imaginary impedances can be realised. This can be done by transforming either a short circuit by transmission lines or an open circuit by transmission lines. Depending on the length of the transmission line a different value for the realised impedance is achieved.

Such impedances realised by transmission lines are called stub lines. Mainly a short circuit is transformed to generate the transmission line because a short circuit is simpler and well defined than an open circuit. The same holds for the signal filter network 6, which is used to filter unwanted harmonics out of the amplified signal. Since the power amplifier 3 exhibits a non linearity and also the up converter 2 unwanted harmonics appear. The matching network 5 and/or the signal filter network 6 can be omitted if the output impedance of the power amplifier 3 is already well matched to the input impedance of the antenna 8 and/or if signals at harmonic frequencies exhibit a very low value. In this case the network 5, 6 is only a transmission line leading to the antenna 8.

The receiving part 7 exhibits an amplifier, filters, a digitising circuit, a signal processing unit and a data sink which is here a speaker but could also be a display device.

The switch 9 is here a PIN diode but also a transistor can be employed. The switch 9 is operated using the processor 15 deciding when the radio station is transmitting signals or not. Here seven time slots of eight are used for receiving signals in the receiving mode and the eighth is used for transmitting signals, the transmitting mode. If not transmitting signals, then the switch 9 is closed, so that signals received by the antenna 8 are transferred to the RX part to be processed there. The signals are then reflected back at the filter network 6 due to the imaginary output impedance of the power amplifier 3.

## Claims

1. Radio station for transmitting and receiving radio signals using a transmitting and a receiving mode being separated in time, the radio station comprising a transmitting part, a receiving part (7), a processor (15) and one antenna (8), the transmitting part exhibits a power amplifier (3) being controlled by the processor (15), the processor (15) being designed to switch off the supply voltage of the power amplifier (3) in the receiving mode using a biasing network (16), the receiving part (7) being connected to the antenna (8) using a switch (9) being operated by the processor (15), characterised in that the power amplifier (3) is connected to the antenna (8) using either a transmission line or a matching network (5) and/or a signal filter network (6).

2. Radio station according to claim 1, wherein the networks (5, 6) consist of discrete elements.

3. Radio station according to claim 1, wherein the networks (5, 6) consist of distributed elements.

4. Radio station according to claim 2 or 3, wherein the switch (9) is a PIN diode or a transistor.
